# EUROPEAN PATENT APPLICATION

(11) **EP 4 047 779 A1**
(43) Date of publication of application: **24.08.2022**
(21) Application number: 21158763.9
(22) Date of filing: 23.02.2021
(51) Int. Cl.: H02J 7/00

(54) **SWITCHING DEVICE FOR A CHARGER**

(71) Applicant: Natune GmbH, 88299 Leutkirch im Allgäu (DE)
(72) Inventor: Tutschner, Andreas, 88299 Leutkirch im Allgäu (DE); Tutschner, Christoph, 88299 Leutkirch im Allgäu (DE); Nägele, Hans-Peter, 87435 Kempten in Allgäu (DE)
(74) Representative: Hofmann, Matthias

(57) **Abstract**

The present invention provides a switching device (200) for a charger for a battery, the switching device (200) comprising an input unit (210) for receiving an electric input current, an output unit (220) for providing an electric output current to the charger, a switch for switching off the electric output current, and a controller for controlling the switch based on a state of charge of the battery, wherein the state of charge is determined by the controller based on the electric output current.

## Description

### TECHNICAL FIELD

The present invention relates to a switching device for a charger for a battery, a system comprising the switching device and a method for switching a charger of a battery.

### BACKGROUND

Modern chargers use intelligent algorithms to precisely determine the state of charge and reduce the charge current such that the battery is charged to precisely 100%, thus avoiding harmful overcharging. Herein, state of charge refers to a level of charge of the battery relative to its capacity.

Besides the optimization of the charger regarding the duration for fully charging the battery, the optimization towards an optimal battery lifetime is also of paramount importance. It is desirable to perform the charging as quick as possible, while yet avoiding degradation of the battery, e.g. due to overheating.

It is known to cut off the power supply to the battery after a predetermined time in order to avoid overcharging of the battery.

WO 2016/046447 A1 discloses a device that comprises: a reception configured to receive an electric current, a supply configured to supply an electric current out from the device in a connection with charging a battery of an electrical device; connectors configured to connect the device between a power unit, which supplies the electric current to the reception, and the electrical device; a switch configured to disconnect at least one of the electrical currents; a control unit configured to control the switch, wherein the control unit comprises a timer configured to control the switch according to a predetermined timing function; a housing, wherein a movement of the housing is configured to generate a stimulus that is configured to the switch for connecting the at least one of the electrical currents and reset the timer.

However, experiments have shown that a simple timer-dependent switching off of the charger is not ideal for extending the lifetime of the battery.

Thus, there is a need for an advanced switching device, which helps to extend the lifetime of the battery.

### SUMMARY OF THE INVENTION

The objective of the present invention is to provide a switching device for a charger for a battery and a method for switching a charger of a battery, which overcome one or more of the above-mentioned problems of the prior art.

A first aspect of the invention provides a switching device for a charger for a battery, the switching device comprising an input unit for receiving an electric input current, an output unit for providing an electric output current to the charger, a switch for switching off the electric output current, and a controller for controlling the switch based on a state of charge of the battery, wherein the state of charge is determined by the controller based on the electric output current.

The switching device of the first aspect is based on the realization that the state of charge of the battery can be determined from a switching device that is external to the charger, wherein the switching device is configured to switch off the charger based on the detected state of charge. Thus, the charging cycle of an existing charger (which is e.g. designed to always charge the battery to 100%) can be modified such that charging is only performed until a predetermined condition related to the state of charge has been reached.

For example, the switching device can be configured to switch off the charger when a state of charge of 80% has been reached. Experiments have shown that charging beyond 80% leads to a degradation of the battery - even though many users do not require their batteries to be always charged to 100%. Thus, the switching device of the first aspect can extend the lifetime of the battery, while only slightly reducing the level of charge available to the user.

The input unit can be configured to receive an electric input current from a power source. The power source can for example comprise a socket can provide a single- or multi-phase AC power or DC power. Preferably, the power source can be a domestic power supply, a stationary energy storage or a power mains.

The battery can be any type of rechargeable battery, including e.g. batteries comprising Lithium-Ion or NiMH cells.

In particular, the battery can be integrated into an electronic device, such as a small device, a battery for an electric motor, such as a pedelec or battery electric vehicle (BEV, PHEV), or comprise a stand-alone battery storage device.

The switch can comprise a relay, a semiconductor power switch, e.g. a transistor, or a similar switch.

The controller can comprise an integrated circuit, particularly comprise a microcontroller, a microcomputer or such.

In a first implementation of the device according to the first aspect, the output unit comprises a standardized power socket and the input unit preferably comprises a matching power plug.

The standard of the output unit power socket is preferably the same standard as the power socket of the charger. Thereby, the switching device can be positioned as a modular unit between the power source and the charger. This allows the switching device to be positioned upstream of the charger, which facilitates an upgrade of existing chargers.

The standard of the power socket can be a standard demanded by law, a standard defined by an organization as well as an industry- or pseudo-standard. The power socket can be standardized according to one of the plug and/or socket type, such as the ITA standard, according to the recommended environmental conditions of the plug, such as the IP Code, according to the power/data-interface, such as the EnergyBus standard, the connection type.

In particular, the standardized power socket can comprise a single- or multi-phase AC or a DC connector.

The switching device can comprise a plurality of input units and/or a plurality of output units, and can in particular be a single- or multi-socket switching device. The switching device can comprise a plurality of switches, particularly each switch configured to switch a respective output unit and/or output connector. It shall be clear that each output connector and/or output socket can be assigned to a respective battery and/or charger, particularly forming a battery pack.

The controller can be configured to switch each of the switches on the basis of at least one state of charge of at least one of the at least one battery and/or charger connected to one of the at least one output connector and/or output socket. The controller can be configured to control the plurality of switches on the basis of the state of charge of a plurality of batteries connected to the switching device. The controller can comprise a battery management system, for controlling the plurality of switches. The controller can particularly be determined to balance cell voltages of the plurality of batteries among same, wherein the plurality of batteries are connected to the switching device and the plurality of switching devices, respectively.

In a further implementation of the device according to the first aspect, the switching device further comprises a current measurement unit for measuring the electric output current at a plurality of times.

It shall be clear that the electric output current provided to the charger at the output unit can provided via internal conductors that connect the output unit with the input unit. The current measurement unit can be configured to measure at least one of a power characteristic value of the electric output current, such as an electric current and/or electric voltage. In embodiments, the power characteristic value can be simply the measured current (for example, if it is assumed that the supplied voltage is constant, the current is characteristic for the supplied power).

The current measurement unit and/or controller can be configured to convert the measured power characteristic value into a controller-readable data point of the detected state of charge, preferably a digital data point. In this way, it is assured that the measured power characteristic value can be processed by the controller. Thus, the controller is able to control the switch on the basis of the detected state of charge.

The data point preferably comprises at least the current data point derived from the measured power characteristic value, particularly an electric current data point of an electric current measurement. The data point can further current data points of additional measurements that are performed at the same time, such as an electric voltage measurement parallel to an electric current measurement. The data point can further comprise a time of the current measurement and/or a reference of a time difference between the current measurements at a plurality of times. The data point can further comprise metadata, such as auxiliary or statistical data associated with the current measurement, such as the measurement device ID. The data point can also comprise ambient condition data associated with the ambient conditions during the current measurement, e.g. derived in course of a parallel ambient condition measurement, such as a measurement of the ambient temperature, received by the current measurement unit and/or the controller from a respective ambient condition measurement unit, such as a temperature sensor, comprising, being connected to and/or being integrated in the current measurement unit and/or the controller, respectively.

Particularly the current measurement unit, but also the controller, can comprise an integrated circuit configured to convert the measured power characteristic value into a controller-readable data point. The respective integrated circuit can further be configured to generate a data point by a combination of data points and/or an attachment of metadata and/or of ambient condition data to a data point. The integrated circuit of the current measurement unit can further be configured to transmit the data point to the controller.

It is understood that a single current data point, e.g. the measured current at a first point in time, is not sufficient for determining a state of charge. However, additional information, e.g. a current-time curve, namely a charging curve, can enable the controller to determine a state of charge based on a plurality of controller-readable characteristic values and the current data points, respectively.

The controller can be configured to detect a certain state of charge of the battery via an indirect connection to the battery via the charger, i.e. remotely from the battery, on the basis of measuring the electric output current at a plurality of times, particularly on the basis of a respective plurality of a battery-specific power characteristic values, particularly on the basis of a respective plurality of data points. The controller can therefore control the switch on the basis of the battery-specific power characteristic values, particularly the charging current, particularly on the basis a plurality of data points.

The current measurement unit can determine the current on the basis of one of the directly measured electric current, or by indirect measurement, e.g. by measuring an electric voltage, a phase relation or an induced magnetic field of the current at the output unit. Particularly, the electric current can be measured by means of an ammeter, such as a shunt-ammeter, a current clamp or a field sensor. As described before, this allows a remote detection of the state of charge of the battery by the switching device.

In a further implementation of the device according to the first aspect, the controller comprises a storage unit for storing for storing a reference output current curve indicative of a typical temporal progression of the output current while charging the battery with the charger, wherein the controller is configured to determine the state of charge of the battery by comparing the measured electric output current at the plurality of times with the reference output current curve. The reference output curve may also comprise a model of the output curve. For example, the model of the output curve may comprise a first part, where the current increases linearly. In a second part, the current may decrease exponentially, and in a third part it may be essentially constant.

Preferably, the progression refers to a single charging cycle, preferably a full charging cycle of the battery and the plurality of batteries, respectively. The progression may also refer to at least one temporal fraction of a single charging cycle, for example for the case that a measurement of a charging cycle is performed incomplete, i.e. the charging cycle is performed uninterrupted and from 0% of the state of charge to a desired state of charge of the battery and the plurality of batteries, respectively.

The temporal progression of the output current may refer to the current measurement of the electric output current, particularly of the power characteristic value, at a plurality of times. Particularly, the temporal progression may refer to a series of current measurements of the electric output current, particularly a series of the power characteristic values and/ or a series of current data points.

The output curve may refer to a representation of the temporal progression of the output current while charging the battery with the charger, particularly a graphical and/or functional representation, such as a plot, of the time-dependent current progression. The output curve may be obtained for example by interpolating between acquired data points.

The reference output current curve may refer to a complete output curve of the battery and the charger connecting the switching device and the battery for charging the battery being typical for the charging of the battery-charger combination with the switching device.

A typical temporal progression of the output current, e.g. represented by the power characteristic values and/or the data points, may refer to a first charging cycle of the battery or to an average temporal progression the output current of a plurality of charging cycles of the battery-charger combination.

The controller can be configured to determine the state of charge of the battery by matching the measured electric output current at the plurality of times with the reference output current curve, particularly matching such that the deviation between to measured electric output current at the plurality of times and the reference output current curve is minimal. The controller can further be configured to determine the state of charge on the basis of the reference charging curve in that the state of charge of the battery of is associated, particularly matched, with a known state of charge of the reference output current curve of the battery. If no state of charge is known for the reference curve, it can be estimated by integrating over the reference curve. The entire curve corresponds to 100% state of charge. Then it can be estimated that a point in time where the integral from 0 to the point of time has an integral value that is e.g. n % of the integral value of the integral over the entire curve, corresponds to a state of charge of n %.

The storage unit can further comprise data points regarding the state of the battery, particularly the number of charging cycles performed or a charging duration, particularly performed by the switching device, and/or the electric device.

The storage unit can also comprise data points regarding ambient conditions, such as the ambient temperature of ambient humidity, particularly ambient conditions of the switching device or the battery, particularly data points of a target ambient condition and an actual ambient condition. In an embodiment, the target ambient conditions can be set by the user of the switching device. The controller can control the switch on the basis of the ambient conditions during the charging of the battery, thereby assuring a charging at optimal ambient conditions or an interruption of the charging at safety-critical ambient conditions. For example, the switching device can be configured to switch off the charger when a measured temperature is higher than a predetermined temperature threshold.

In embodiments, the storage unit can also comprise derived data points that are derived from measured data points, particularly derived in combination with other data points, such as an energy consumption during a charging cycle, at least one quality parameter regarding capacity loss of the battery over time, at least one reference number of battery-protecting and/or - harming cycles and/or an extrapolated end of lifetime of the battery, particularly in comparison to other electric devices-battery combinations. The derived data points can further comprise data points derived in combination with non-technical data points, such as energy consumption costs.

The storage unit or the storage unit can comprise a database for data points regarding batteries and/or chargers. This allows the controller to recognize a charger and/or a battery. Further, the storage unit or the storage unit can be a basis for statistics on the recognized battery and/or charger. Hence, a further optimized charging regarding a maximized lifetime of the battery on the basis of historic data of the battery and/or the charger is facilitated.

The switching device can be integrated in a Smart-Home environment, a data point-driven combination of a plurality of switching devices, wherein the control of a switch of at least one switching device by the controller is based on the data points of the storage unit and/or the storage unit of at least one of the plurality of switching devices.

In a further implementation of the device according to the first aspect, the controller is configured to determine the state of charge of the battery based on the measured current at the plurality of times, particularly based on an area under the reference output current curve.

The controller can be configured to integrate over the measured current, particularly of the measured power characteristic values or the current data points at the plurality of times, representing the charge transferred from the power source via the input unit and the output unit to the battery.

The controller can be configured to match the measured electric output current at the plurality of times with the output current curve on the basis of a preferably sectional temporal progression of a charging curve of a battery. The controller can be configured to match the measured electric output current at the plurality of times with the output current curve on the basis of characteristic sections of the measured charging curve including the respective values. The characteristic sections can comprise curvature radii, gradients, peaks, steps, plateau levels, maxima and/or minima, steps or fluctuation patterns of the charging curve.

The integral over a plurality of measured data points allows to remotely estimate the amount of energy that the battery has been charged with. This allows estimating a state of charge of the battery. Thus, the switching device can determine when a state of charge has reached a predetermined threshold, e.g. 80%, and can then switch off the charger.

Particularly in case of an incomplete charging cycle, the controller can be configured to integrate over the reference output curve to determine a known state of charge of the reference output current curve of the battery, particularly to integrate the reference electric output curve according to, particularly in course of, the progression of the matched measured electric output current. Thus, the controller may activate the switch as soon as the integral result exceeds a desired state of charge, e.g. 80% of the state of charge, of the battery.

In a further implementation of the device according to the first aspect, the controller is configured to determine the reference output current curve based on a reference measurement of the electric output current at a plurality of times during a charging cycle, wherein preferably the charging cycle is a full charging cycle.

The reference measurement preferably starts at a low state of charge of the battery, particularly less than 30%, less than 20%, less than 10% or less than 5% and, the reference measurement ends at high state of charges of the battery, particularly exceeds the predetermined state of charge for switching off the current to the battery, preferably ends at a state of charge of least 60%, at least 70%, at least 80% or at least 90% of the capacity of the battery.

Performing the reference measurement may also comprise determining, during the measurement, several charging phases. E.g. by comparing current with previous current values, it can be determined that the charging process is in a first phase, where the current increases linearly. It can then be determined that in a second phase the current decreases exponentially and in a third phase it is essentially constant. These determined phases, e.g. beginning and end of a phase, type (linear or exponential) and additional parameters, can be stored together with the reference measurements. The phases may be more reliable than the individual current measurements, which may have some noise.

A full cycle refers to a charging measurement from a state of charge of essentially 0% to a state of charge of essentially 100% of the capacity of the battery. Thus, it is ensured that the progression of the measured electric output current is always within the range of state of charges covered by the measurement of the reference output curve, which optimizes the probability for a matching.

In a further implementation of the device according to the first aspect, storage unit of the controller is configured to store a plurality of reference output current curves corresponding to a plurality of charger/battery pairs and wherein the controller is configured to determine a presently connected charger/battery pair by comparing the measured electric output current with the plurality of reference output curves.

It shall be clear that the reference measurement can be performed for a plurality of charger/battery pairs.

The controller can therefore be configured to determine the state of charge of the battery by comparing, particularly matching, the measured electric output current at the plurality of times with the plurality reference output current curves, particularly matching such that the deviation between to measured electric output current at the plurality of times and at least one of the reference output current curves is minimal. Thereby, the controller can recognize, i.e. identify, various batteries and/or chargers.

The controller can thereby control the switch on the basis of the comparison of re-identified batteries with the battery connected to the switching device. The controller can thus control the switch on the basis of a change in the time-related change of charging characteristics, particularly regarding the progression of charging curve, of the battery. This allows a control of the switch by the controller of the switching device on the basis of the state of the battery, particularly one of the time-related degradation, the performance or the quality of the battery, the so-called "State-of-health" of the battery, caused for example by the increase of the resistance of the battery for example due to material-related degradation processes inside the battery. Hence, an optimized charging regarding a maximized lifetime of the battery is facilitated.

The recognition of the charging characteristics, particularly of the charging curve, allows the optimized determination of the state of charge. Thus, a more precise control of the switching at an optimized state of charge by the controller is facilitated.

The recognition further allows the controller of the switching device to control the switch on the basis of an extrapolation of the "State-of health", particularly on an extrapolation of the end of lifetime of the battery. For example, the controller can recognize a battery or charger-battery combination and the controller can further calculate a decrease in the battery capacity compared to a previous charging cycle or a continued gradual decrease in the battery capacity over a series of charging cycles. The controller can extrapolate an actual capacity of the battery for the currently running charging cycle and adapt the state of charge calculation. This allows an optimal charging of the battery with respect to the battery lifetime. Further, the controller can be configured to calculate an end-of lifetime of a battery for an indication to the user. This can assure that the battery is not prematurely replaced by the user.

The controller can also be configured to activate the switch when the controller recognizes a deviation from or a value of at least one data point stored in the storage unit, such as an ambient temperature that is exceeding a predefined value after the battery caught fire. Thus, the switching device can comprise an emergency stop for the power supply to the output unit.

The controller can be configured to activate the switch when the controller recognizes a constant current flow at a predefined range associated with a standby-current. Thus, the switching device can comprise a "standby killer" to the charger and/or the battery.

In a further implementation of the device according to the first aspect, the controller comprises a neural network.

The neural network can determine the temporal progression of the measured electric output current, particularly the measured charging curve, on the basis of the reference output current curve.

The neural network can recognize the charger/battery pair on the basis of the stored plurality of reference output current curves and the measured temporal progression of the measured electric output current, particularly the measured charging curve.

The neural network can be trained by the reference current output curves for known charger-battery combinations. For example, the switching device can be put into a training mode, where a known charger C1 is used to charge a known battery Bi from empty to full state of charge. The trained neural network can then be used as part of the controller to recognize when the same combination of charger C1 and battery Bi is connected to the switching device.

The neural network can recognize the charger and/or the battery on the basis of at least a part of a full cycle of the charging of a battery, particularly on the basis of at least one a section of the charging curve of the battery. This allows recognition of a charging characteristic, particularly the charging curve, on the basis of a partial coverage of the charging characteristic, particularly the charging curve, by the current data points. Thus, the controller of the switching device can recognize the charger and/or battery before the charging is completed. Since the controller can recognize the charger and/or battery before e.g. an 80% state of charge has been reached, it can also determine the current state of charge of this battery/charger combination before 80% state of charge has been reached. Thus, the charging can be switched off at 80%.

It is understood that the charge curve is not exactly the same at different charge cycles. Here, the neural network can be trained to recognize a charger/battery pair even if the charge curve (as expressed e.g. by the current data points) is not exactly the same in subsequent charge cycles. Further, the neural network can be trained to determine a progression of the measured power characteristic values on the basis of one of the reference electrical output curve, a plurality of reference electrical output curves of a battery and/or battery/charger pair, or a plurality of reference electrical output curves a battery/charger pair or a plurality of battery/charger pairs.

Thus, the neural network can improve the recognition of the battery and/or the charger. This facilitates an improved recognition of chargers and/or batteries and, thus, the leads to an improved determination of the state of charge of the battery. By that, more advanced control of the switch based on the state of charge is achieved for further enhancing the battery lifetime.

The controller is determined to recognize the charger and/or the battery on the basis of at least two of the at least one part of a full cycle of the charging of a battery, particularly on the basis of at least two of the at least a section of the charging curve of the battery, if the controller cannot recognize the charger and/or the battery only on the basis of the stored plurality of data points

This multi-level recognition of the controller allows the controller to activate the switch at an optimal state of charge and thereby an extended lifetime of the battery compared to a threshold- or time-dependent switch.

In a further implementation of the device according to the first aspect, the switching device is configured to switch off at a predetermined threshold value of the output current or time, if the controller determines that it cannot determine the presently connected charger and/or the presently connected battery.

This provides a fail-safe operation of the switching device in case the controller cannot recognize the charger and/or the battery.

In a further implementation of the switching device according to the first aspect, the switching device is configured to determine one of several charge phases, based on a slope of the output current over time, wherein preferably the charge phase is defined by a constant slope or an exponential increase or decrease of the output current.

This allows for an improved recognition of the current charge phase and thus improved detection of the charge level.

In a further implementation of the switching device according to the first aspect, the device further comprises a zero watt switch, wherein the zero watt switch is configured to interrupt the electric input current, such that no power is consumed by the switching device.

In this way, no more power is consumed by the switching device once the charging of the battery has been completed to the desired state of charge.

The zero watt switch can comprise a power switch or a part of the power switch, in particular comprise a relay, a semiconductor power switch or such.

The controller can activate the zero watt switch when the switch is inactive or activated.

The switching device can be configured to reactivate the zero watt switch by connecting the charger to the switching device or by connecting the input unit to the power source. The zero watt switch can be reactivated by for short-term electrically bridging the zero watt switch.

The zero watt switch can help to save energy, to protect the battery from overcharging or degradation and therefore increases the cost and resource reduction when the battery and/or the charger is connected to the power source via the switching device. Particularly, the zero watt switch can comprise the emergency stop for the power supply to the output unit.

In a further implementation of the device according to the first aspect, the switching device further comprises a reactivation button for reactivating the switching device after it has been switched off using the zero watt switch.

The reactivation button can be mechanically driven, such as a push button or a self-restoring flip switch.

The switching device can comprise a power source connected to the zero watt switch, wherein the reactivation button can electrically bridge the zero watt switch upon activation of the reactivation button. Alternatively, a mechanical push button/switch can be used to briefly bypass the zero watt switch (e.g. a relay). Alternatively, the zero watt switch can also be bridged by plugging in a mechanical plug (e.g. Euro plug), which reactivates the charge control and makes it operational again.

In a further implementation of the device according to the first aspect, the switching device further comprises a communication unit for communicating with an electric device that comprises the battery, wherein the communication unit preferably comprises one of a Bluetooth unit, an NFC unit or a Wi-Fi unit.

The communication unit can be configured to provide a data connection to the controller, particularly the storing device. The communication unit is configured to receive and/or send data points stored or to be stored, respectively, in the storage unit.

It shall be clear, that all data points can be received and/or sent by the communication unit, and be received, stored and provided from/to the communication unit to/by the storage unit through the control device. In particular, the target device can be configured to provide the data points stored in the storage unit to the communication unit.

The communication unit can particularly obtain a state of charge directly from the electric device that comprises the to-be-charged battery. For example, the electric device can be a mobile phone and the mobile phone can comprise an app that is configured to transmit the current state of charge of the battery to the communication unit of the switching device. In this way, the switching device can obtain the precise state of charge or the precise charger/battery pair without having to measure the charge current and/or the need for reference output current curves. Furthermore, obtaining the charger/battery pair via the communication unit directly from the device comprising the battery has the advantage that no training for recognizing different chargers and/or batteries is necessary.

The electric device can be a target device that is further be configured to control the control unit, particularly in the context of the Smart-Home system. The electric device can particularly comprise a mobile phone. Thereby, a user of the electric device can receive and/or send instructions from/to the switching device to control the controller in order to assure a safe and economic operation of the switching device and/or the charger. For example, the user can use the app on his or her mobile phone to switch off the charging even before a predetermined state of charge has been reached.

Preferably, the switching device further comprises an indication unit, such as a light-emitting diode, LED, acoustic output device, and/or a display, for indicating a status of the switching device. Using an acoustic output device, e.g. for notifying the user when a predetermined charge level has been reached and the switching device is switched off has the advantage that the user is informed of the finished charging process, even if they are currently not looking at the switching device.

The status can comprise at least one of the data points stored in the storage unit. The status can further comprise at least one data point received from the electric device. The status can also comprise a combination and/or a derived data point from the storage unit and/or the electric device.

The status can particularly comprise a battery state, such as the state of charge, the state-of-health or an extrapolated end of lifetime.

In a further implementation of the device according to the first aspect, the switching device is further configured to measure a charge capacity of the battery and to store the measured charge capacity in a database, such that a progression of the measured charge capacity over successive charge cycles can be determined, wherein preferably the switching device comprises a notification unit to notify the user if the charge capacity of the battery has decreased by more than a predetermined threshold.

The charge capacity can refer to an estimate of the actual capacity of the battery. For example, the switching device can estimate the actual capacity of the battery by estimating or measuring the mAh that are provided to the battery over the duration of the charging process. Even if the actual capacity (corresponding to the energy that the battery stores and can provide to a consumer) may be slightly lower than the charge capacity (corresponding to the energy that is provided to the battery during charging), it may still be a good estimate for the degradation of the battery over time.

Preferably, the switching device is configured to recognize the battery, such that the measured charge capacity can be stored for the recognized battery. Thus, the degradation over time can be observed for several batteries. The database can be configured to store a date and/or time with the corresponding value of the charge capacity. Thus, the database can be used to draw a plot of charge capacity of the battery over time.

For example, the user can be notified when the charge capacity has decreased by more than 20%, i.e., is only 80% of the original value of the charge capacity. For example, the notification can comprise a warning unit, such as e.g. an LED, that notifies the user when the degradation beyond the threshold has occurred.

Through an Internet database, identical battery devices from different users can be identified. These can then be compared and the aging can be tracked. This enables the system to issue a "battery certificate" to the customer, because the system knows how high the capacity is compared to others (e.g. new devices). In other words, it is not a matter of two identical batteries being connected to a device, but rather a comparison of data from batteries worldwide from different users can be performed.

In a further implementation of the device according to the first aspect, the switching device further comprises at least one housing comprising at least two units of the switching device, wherein the housing is preferably comprised in one of a flush-mounted socket, a cable, a multiple-socket or a cable drum.

The housing can thereby be seamlessly integrated into existing electric power units.

The housing can comprise the output unit as one of the least two units of the switching device. The housing can comprise more than one output device, providing a multiple socket.

The housing unit can further be configured to comply with the IP 3 standard or higher. In particular, the housing can be configured to withstand outside weather conditions.

In a further implementation of the device according to the first aspect relates to a system comprising, a charger and an electric device, connected such that a current to a battery of the electric device via the charger can be switched off by the switching device based on a state of charge of the battery determined by the switching device.

A second aspect of the invention provides a method for switching a charger of a battery, the method comprising providing an electric output current to the charger, measuring, during a first charging of the battery with the charger, the electric output current at a first plurality of times, based on the measured electric output current at the first plurality of times, determining a reference output charging curve of the charger and/or the battery, during a second charging of the battery, determining a state of charge of the battery based on a comparison of the measured electric output current at a second plurality of times and the reference output charging curve, and stopping to provide the electric output current to the charger when a predetermined state of charge has been reached.

The method of the second aspect can be implemented for example by the switching device of the first aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a block diagram of a switching device in accordance with a first embodiment of the present invention;
- FIG. 2: is a block diagram of a switching device in accordance with a second embodiment of the present invention;
- FIG. 3A: is a schematic representation of the switching device in accordance with the second embodiment of the present invention;
- FIG. 3B: is a schematic representation of a system comprising the switching device in accordance with the second embodiment of the present invention;
- FIG. 4A: is a representation of a reference charging curve according to an embodiment of the present invention,
- FIG. 4B: is a representation of a progression of measured power characteristic values according to an embodiment of the present invention,
- FIG. 5A: is a representation of a reference charging curve of a first battery/charger pair,
- FIG. 5B: is a representation of a reference charging curve of a second battery/charger pair,
- FIG. 5C: is another representation of a progression of measured power characteristic values of the second battery/charger pair, and
- FIG. 6: shows a specific example of a charge curve with several phases.

### DETAILED DESCRIPTION OF EMBODIMENTS

The foregoing descriptions are only implementation manners of the present invention, the scope of the present invention is not limited to this. Any variations or replacements may be easily made through person skilled in the art. Therefore, the protection scope of the present invention should be subject to the protection scope of the attached claims.

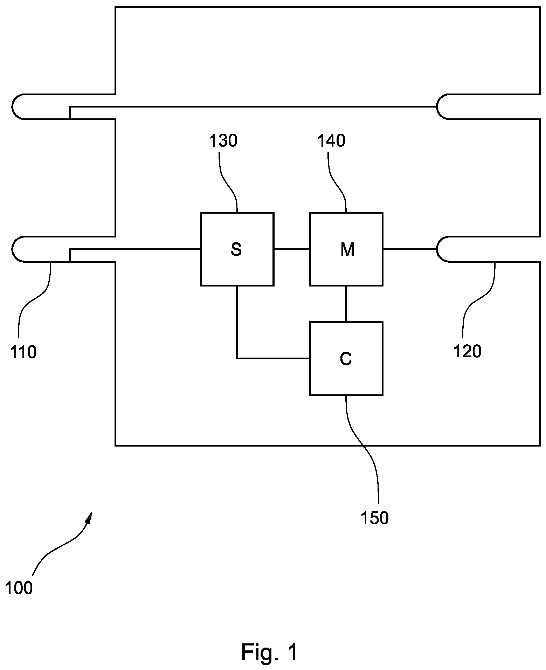

FIG. 1 is a block diagram of a switching device 100 for a charger for a battery. The switching device 100 comprises an input unit 110, an output unit 120, a switch 130 and a measurement unit 140 and a controller 150.

The input unit 110 is configured to receive an electric input current, e.g. from a wall socket. Preferably, the input unit comprises a plug with at least two connectors to be plugged into the wall socket.

The output unit 120 is configured to provide an electric output current to the charger. Preferably, the output unit 120 comprises a socket with at least two connectors.

Preferably, the two connectors of the input unit 110 are connected to the connectors of the output unit 120 such that the received electric input current may (mostly) be provided as electric output current.

The switch 130 may be arranged between the input unit 110 and the output unit 120 such that the input unit 110 may be electrically disconnected from the output unit 120.

The measurement unit may be configured to measure a current to the battery. In the embodiment shown in FIG. 1, the measurement unit 140 is arranged between the input unit 110 and the output unit 120 and may be configured for measuring the electric output current that is provided to the charger.

The controller 150 may be connected to the switch 130 and configured to control the switch 130 based on the detected state of charge of the battery. Preferably, the controller 150 maybe configured to control the switch based on when a predetermined target state of charge, for example 80%, has been reached. In this way, the switching device may ensure that the battery is charged only up to the predetermined target state of charge. Thus, a charging of the battery to the full capacity (which typically causes the most degradation to the battery) is avoided.

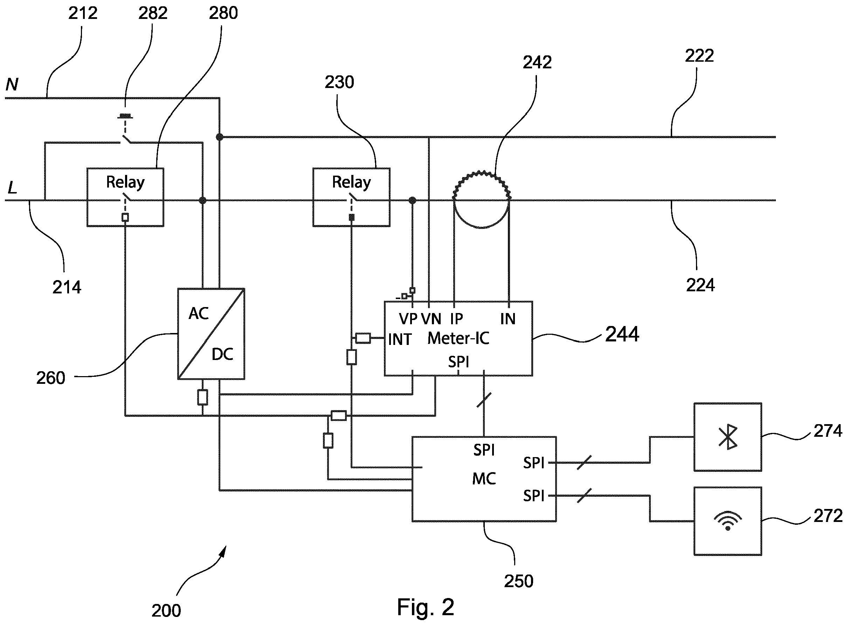

FIG. 2 is a block diagram illustrating a switching device 200 in accordance with another embodiment of the present invention.

The switching device 200 of FIG. 2 comprises an input unit which comprises a first and a second input connector 212, 214 and an output unit which comprises a first and a second output connector 222, 224, a measurement unit 242, 244, a controller 525, a power source 260 and communication units 272, 274.

The first input connector 212 may be connected to the second output connector 222. The first input connector 212 may be connected to the neutral conductor N of a power supply, and the second input connector 214 may be connected to a phase conductor L of a power supply.

The switch 230 may be interposed between second input connector and second output connector. Current may flow from the connector 214 to the connector 224 when the switch is closed. In other embodiments, both the first connection (between first input connector 212 and first output connector 222) and the second connection (between second input connector 214 and second output connector 224) may be provided with switches, which may be preferably switched in the same way.

The switching device according to the second embodiment comprises a measurement unit 242, 244. The measurement unit 242, 244 comprises a measuring unit 242 and an integrated circuit 244. The integrated circuit 244 according to FIG 2. is a metering integrated circuit and may be connected to the power supply 260 for being electrically powered. The electrical connection between the power supply 260 and the integrated circuit comprises a resistance.

The integrated circuit 244 comprises a first connector IN and a phase input connector IP, wherein a measuring unit 7 for measuring an electrical current at the phase conductor L is interposed between the neutral input connector IN and the phase input connector IP by means of a respective electrical connection. The measuring unit 242 of the second embodiment is a measurement coil, such as a current clamp. For a detection of the state of charge of the battery based on voltage measurements, the integrated circuit unit 244 may comprises a neutral input connector VN for an electrical connection to the neutral conductor N and a phase input connector VP for an electrical connection to the phase conductor L. It is understood that the average voltage of the power supply (e.g. the power grid) will typically not change during a charging process. However, when the charger is a switching power supply, the on-cycles will change during the charging process. Thus, high frequency harmonics of the square wave current consumption by the charger may be overlaid with the main voltage. These harmonics can be detected, e.g. by filtering out low frequency components (such as the 50 Hz).

The integrated circuit 244 further comprises serial peripheral interface connector SPI-IC. For multi-phase power sources, also a measurement of a phase relation of the current by means of the measurement unit 242, 244 may be a basis for a detection of the state of charge.

The switching device 200 of FIG. 2 further comprises a controller 250 being electrically connected to the power source 260 for being electrically powered, wherein the electrical connection comprises a resistor. The controller according to the embodiment of FIG. 2 maybe a microcontroller MC. The controller 250 comprises serial peripheral interface connector SPI-MC1 that may be electrically connected to a serial peripheral interface connector SPI-IC of the measurement unit 244. The controller may further comprise two serial peripheral interface connectors SPI-MC2, SPI-MC3.

The controller 250 is further electrically connected to the switch 230. The current to the output unit may be cut off in that the controller 250 powers the switch via the connection.

The switching device of FIG. 2 further comprises communication units 272, 274 wherein the communication units 272, 274 may comprise a Wi-Fi communication unit 272 and a Bluetooth communication unit 274.

The integrated circuit 244 may permanently acquire characteristic measurement values, such as an electrical current measurement, value from the measuring unit 242 or generates characteristic measurement values on the basis of the input connection to the neutral conductor VN and the phase conductor VP.

The integrated circuit 244 of the measurement unit 242, 244 may convert the characteristic measurement values to controller-readable current data points. The conversion may also be performed by the controller 250. The integrated circuit may submit the characteristic measurement values and/or the current data points to the controller 250 via the connection between the serial peripheral interface connector SPI-MIC of the integrated circuit 244 and the serial peripheral interface connector SPI-MC of the controller 250.

The controller may comprise a storage unit (not depicted) for storing a plurality of data points, particularly current data points. The controller 250 may receive the current data point from the integrated circuit 244 and may store same in the storage unit (not depicted) of the controller 250.

The controller 250 may be configured to compare the progression of the measured current data points, particularly the measured charging curve, with the stored reference output charging curve. The comparison may comprise a matching of the progression of the measured current data points, particularly the measured charging curve, with the stored reference output charging curve such that a deviation between the progression of the measured current data points, particularly the measured charging curve, with the stored reference output charging curve is minimized.

The controller may comprise a neural network (not depicted). The ability of the controller 250 to match current data points to the reference output charging curve allows the controller 250 to determine a state of charge of the battery. The state of charge of the battery may be based on the matching reference output current curve such that a measured power characteristic value and/or measured current data point may be correlated to a state of charge of the reference output charging curve.

By the permanent acquisition of characteristic measurement values the number of current data points may be steadily extended. On this extended basis of current data points, a more and more specific comparison, particularly of the neural network is facilitated.

The controller may be configured to determine a state of charge based on the measured current at the plurality of times, particularly by integrating over the power characteristic values or current data points or over a reference output current curve corresponding to the matched measured current data points.

It shall be clear that the accuracy of the calculated state of charge increases with increased reconstruction details of the charging curve and allows to precisely calculate an optimal current cut-off time, e.g. at a state of charge of the battery at 80%.

The controller 250 may be configured to activate the power supply to the switch 230 when reaching the calculated optimal state of charge. Subsequently, the power supply to the charger at the output unit may be cut off. Hence, the battery (not depicted) is protected from an increased degradation caused by further supply of current beyond the optimal capacity regarding the lifetime of the battery (not depicted). In particular, the power supply to the battery may be switched off well below the total capacity of the battery in order to avoid overcharging and, hence to prevent an early loss of battery performance.

The controller 250 may also calculate the optimal time for a cut-off the power supply when taking into account further aspects of a plurality of reference current output curves. For example, the total number of charging cycles already experienced by the battery (not depicted may be taken into account, thereby recognizing and/or calculating a shift in the total capacity of the battery (not depicted) based on experience values calculated on the basis of earlier charging cycles of the battery. By the comparison of the charging cycles, the controller 250 may recognize a gradual shift or a flattening of the charging curve in course of the series of charging cycles, which may indicate a gradual performance loss of the battery (not depicted). As a consequence, the controller may calculate a new optimal time for a cut-off of the power supply to the battery (not depicted) and/or the charger (not depicted), respectively. Thus, the controller 250 may power the switch 230 earlier than in the previous charging cycles.

Furthermore, the controller 250 may calculate a probable end of lifetime of the battery (not depicted) when comparing the series of earlier charging cycles of the same or similar batteries with the measured charging cycle.

The database of the storage unit (not depicted) may be continuously extended by receiving measured current data points. It shall be clear that the database may also be extended by receiving data points via the communication units 272, 274.

The controller 250 may further be configured to calculate statistics on the basis of the data points stored in the storage unit (not depicted). The statistics may comprise the amount of energy needed for a charging cycle or energy costs for a charging cycle or over the battery lifetime, allowing for example a cost-optimized charging. The controller 250 may also be configured to calculate a CO2 balance including CO2 prices e.g. received via one of the communication units 9, 10. Thus, the battery (not depicted) may be charged cost-efficiently, for example, at a time of the day when energy costs are usually lowest.

The statistics may also comprise a number of charging cycles and their duration, the loss of capacity of the battery (not depicted), a number of battery-saving charging processes, e.g. within the specified optimum ambient conditions and at low charging current, a number of battery-damaging charging processes.

The statistics may further relate to quality or performance indicators of the battery. This may include the distance already travelled with a battery-powered transport means, such as a pedelec, its associated CO2/energy balance. Further, the controller 250 may be configured to calculate a data basis for a certificate of the current battery condition ("Akku-TUV"), which would allow a comparison with other, identical or similar batteries for buyer protection, e.g. for used goods, trade of batteries etc. These derived statistics may further be associated with ordering or re-order recommendations. For example, a rating indicator may drop in case the capacity of a battery drops below a certain value or is about to fall below a critical value significantly earlier than the calculated end of lifetime of the battery. This may result in a maintenance notification to the user via the communication units 272, 274.

The controller 250 may also be configured to charge the battery based on data points of ambient conditions of the battery, particularly ambient temperature, for an optimized charging with regard to increasing lifetime f the battery (not depicted). For example, the controller 250 may activate the switch when exceeding a predefined ambient temperature in order to protect the battery form overheating.

Further, the controller 250 may also control ambient conditions independently from a charging cycle, e.g. after having activated the switch 230 in order to assure battery-friendly ambient conditions on the basis of predefined threshold values defined by the user.

Further, the charging device may indicate to the user if the battery has not been charged for a predetermined timeframe for regularly charging the battery for avoiding aging damage of the battery. The user may define and be informed of deviations outside the predefined thresholds via the communication unis 272, 274. Generally, the communication unit(s) of the switching device can be configured to communicate with the device that is being charged (e.g. that the battery status is transmitted to the switching device (e.g. via WLAN/Bluetooth, 5G, 4G, network connection, USB, etc..). Alternatively, or additionally, the communication unit can be configured to communicate with any device (with or without battery), for external control and evaluation of the switching device.

The controller 250 may further be configured to charge the battery (not depicted) according to user-specific information regarding the use of the electric device (not depicted), particularly a battery-powered transport means, by a user. The controller 250 may for example be configured to set the target state of charge according to a predefined range to be covered with the transport means (not depicted), based on current data points associated with user-specific data points, for example data points of an energy consumption of the transport means during the use of the transport means by the user. This allows the charging of the battery according to a predefined transport range.

The switching device 200 may further be determined to provide the user of the transport means (not depicted) with user-specific information, such as information regarding an average distance covered and/or costs per time and/or per distance and/or with respect to energy consumed and/or information regarding emissions of the electric device (not depicted), based on a predetermined and/or a calculated energy consumption per distance of electric transport means. Furthermore, the share of user performance and energy consumption per user of the electric transport (not depicted) means may also be calculated. Further, the information may also comprise user-specific information regarding the fitness of the user, for example regarding the use of a pedelec by the user and an associated distance of travel. The information may be provided to the user via the communication units 272, 274 and/or an indication unit (not depicted).

The controller 250 may further be configured to deactivate the switch 230 based on an end-time for achieving a predetermined state of charge. For example, the controller 250 may be configured to activate the switch 250 after the charger-battery combination has been recognized. The recognition of the charger-battery combination may also be supported by a data point input via the communication units 272, 274 from the electric device (not de, not depicted. Based on a calculated duration for charging the battery to a predetermined state of charge performed by the controller 250, e.g. 80% of the full capacity of the battery, the controller 250 deactivates the switch 230 at a time respectively prior to the predefined end-time. Thereby, a charging end-time may be achieved such that a self-discharge of the battery (not depicted) is minimized. The battery (not depicted) may therefore be used at full state of charge as desired while yet avoiding an impairment of the battery performance associated with frequent recharging.

The controller 250 may further comprise a timer that can be configured to activate the switch 230. The controller 250 may be configured to perform a predefined control of the switch 230 upon activation by the timer. Thereby, a charging can be delayed such that the battery charging cycle is finished at desired state of charge at a predefined time for avoiding self-discharging of the battery (not depicted) and ensuring a safe handling and/or economic charging of the battery (not depicted).

The switching device 200 may also be configured to limit the amount of current per time provided at the output unit 222, 224. For this purpose, the switch 230 may comprise a tuneable semiconductor switch 230, such as a transistor, e.g. a power transistor, such as an IGBT. The controller 250 may thereby controls the switch 230 by means of a control current or control voltage applied at the power output connector INT. Experiments have shown that a provision of a limited charging current to the battery (not depicted) may improve the battery lifetime.

The controller 250 may be configured to perform a battery balancing of a battery (not depicted), preferably of a battery pack comprising an interconnected plurality of identical types of batteries. Here, controller 250 may be configured to control the switch 230 such that the switching device 200 provides a current to the charger (not depicted) beyond the desired state of charge the batteries (not depicted) for a predefined timeframe. The timeframe may preferably be defined by the user or be calculated by the controller 250. The current may be limited by the means described above. During that timeframe, the charges in the battery may equilibrate, which is known to contribute to an increased lifetime of the battery (not depicted).

The charging current may further be limited on the basis of ambient conditions. For example, the charging current may be controlled by the controller 250 by controlling the tuneable switch 230 according to the ambient temperature. For example, the charging current may be limited when the ambient temperature exceeds a predefined ambient temperature in order to avoid overheating of the battery (not depicted).

The switching device according to the embodiment of FIG. 2 may further comprise a zero watt switch 280, particularly being normally closed, being interposed between the connector 214 of the input unit 212, 214 and the connector 224 of the output unit 22, 224 of the phase conductor L. The zero watt switch 280 may particularly be positioned closer to the input unit 212, 214 than the switch 230. The zero watt switch 280 according to the embodiments of FIG. 2 may be a bi-stable switch. Upon reaching the optimal state of charge for cutting-off the power supply, the control unit 250 may activate the zero watt switch 280 instead of the switch 230 in order to cut-off the power supply to all electrical loads of the switching device 200, namely the measurement unit 242, 244 and the controller 250.

The switching device 200 may further comprise a reactivation button 282 for reactivating the switching device 200 after the zero watt switch 280 has been activated. The reactivation button 282 may be connected to the power source 260 and the phase conductor L such that an activation of the reactivation button 282 may bridge the zero watt switch 280 and may provide power to the controller 250 as well as to the measurement unit 242, 244, and furthermore resetting the zero watt switch 12.

The controller 250 is configured to carry out intelligent algorithms for charge control.

Since battery balancing helps to increase the lifetime of a battery, especially in the case of larger battery capacities with many cells, an algorithm implemented on controller 250 can determine how often this kind of balancing should be done optimally. In the case of battery balancing, the switching device 200 is configured to switch the switches 230, 280 such that the battery is fully charged up to the maximum charge capacity and active for a certain period beyond this. The time period is specified by an algorithm or by the user so that the external charge control can balance all cell voltages. Many input variables are entered into the algorithm, such as the battery capacity determined during charging, maximum current consumption, charging time and more.

To reduce the risk of fire when charging batteries, the charge control can additionally monitor the ambient conditions (such as heat and humidity), e.g. through additional sensors (not shown in FIG. 2) as well as the current consumption of the connected devices. If an atypical behaviour of the connected device incl. energy carrier is detected, the power supply for the connected charger can be throttled or the device incl. energy carrier can be completely disconnected from the mains. The environmental conditions are also taken into account in the neural network to determine the optimal switch-off point.

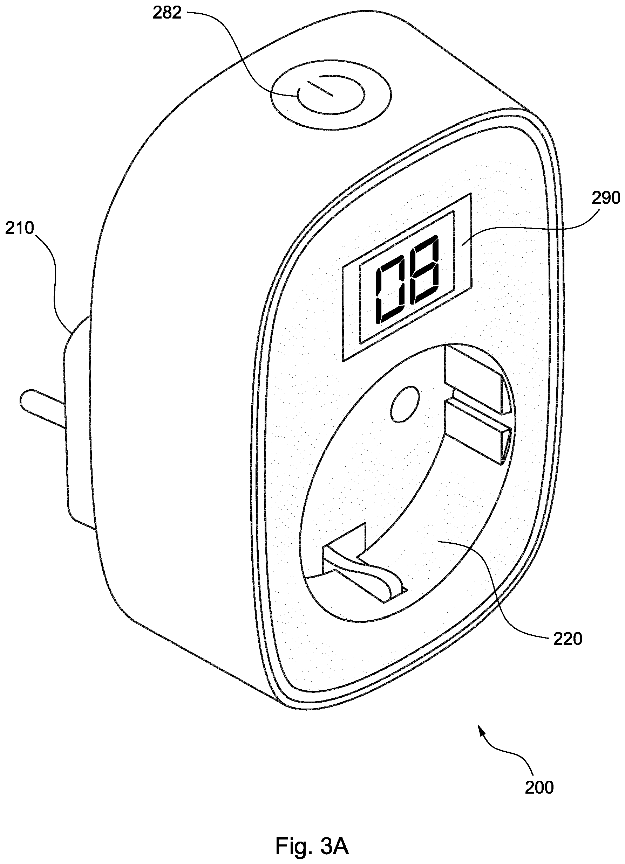

FIG. 3A shows the switching device according to the embodiment of FIG. 2 of the present invention. The switching device 200 particularly comprises a housing. The housing comprises the input unit 210 and the output unit 220, wherein the output unit may be a standardized socket, particularly a socket standardized according to CEE 7/3, wherein the input unit 210 may be a matching plug according to the standard CEE7/4. The input unit 210 and output unit 220 are averting each other at opposite sides of the switching device 200. The housing may particularly be determined to resist ambient conditions and may further be configured to protect the electrical components of the switching device 200 located inside the housing. The housing may comply with the standard IP44.

The housing may also comprise a plurality of input units 210 and/or output units 220, particularly comprise at least one USB socket and/or plug. The housing may further comprise an energy harvesting unit (not depicted) for providing as power source, preferably a power source in addition to the power supply at the input unit 210.

The housing may be configured to be integrated into existing power supply systems, for example in domestic or building single- or multi-sockets/connectors, such as single- or multi socket wall sockets. The housing may also be integrated in power supply cables (not depicted).

The housing may further comprise holding means (not depicted) for attaching the switching device 200 to a power unit (not depicted) and/or a charger (not depicted), for example comprise a locking means that may be configured to cooperate with matching engagement means at the power source and/or the plug. For example, the socket of the power supply may comprise clamps that may engage into recesses at the housing, particularly the plug/socket of the input unit 210. The clamp/recess-relation being may also be arranged vice versa. Correspondingly, a likewise connection may be present between the switching device, particularly the plug/socket of the output unit 220, and the charger (not depicted), particularly the socket/plug of the charger (not depicted).

The switching device according to the embodiment of FIG. 3A also comprises the reactivation button 13, embodied in FIG. 3A as push-button.

The switching device 200 of FIG. 3A further comprises an indication unit 290, particularly a display, particularly configured to indicate the target state of charge for cutting off the power supply. The display may also be configured to indicate an actual state of charge or any other data point stored in the storage unit of the switching device 200.

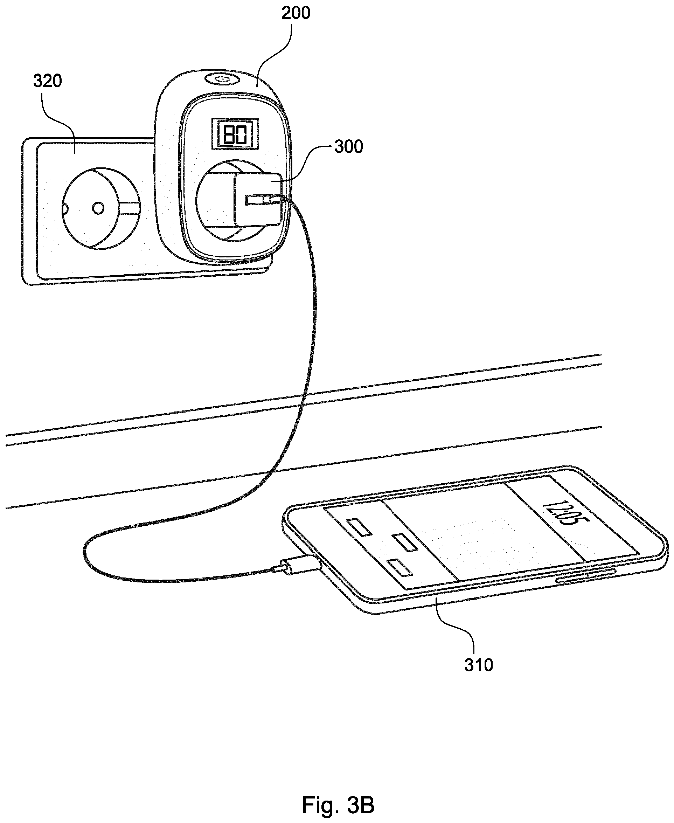

FIG. 3B shows a system according to the second embodiment of the present invention according to FIG 2 and FIG. 3A comprising the switching device 200. The system further comprises a charger 300 and an electric device 310 comprising the battery to be charged (not depicted). The electric device 310 of FIG. 3B is a mobile phone, the charger 300 may be a respective charger for the mobile phone 310. The charger 300 may be electrically connected to the electric device 310 by means of an electric connection. The charger may also be connected to the output unit 220 of the switching device 200. The switching device 200 maybe connected to a plug or socket of power source, such as a multi-socket power means 320. It shall be clear that the socket of the multi-socket power means 230 may match the plug of the input unit 210, wherein the socket of the output unit 220 may match the plug of the charger 11. Particularly, all socket/plug connectors may match each other, respectively, e.g. may be compliant to standard CEE 7/3 and CEE 7/4, respectively as shown in FIG. 3B.

The electric device 200 may be configured to control the controller 250 e.g. by means of an application stored at a storage unit of the electronic device 310. For example, the mobile phone 310 of FIG. 3B may be configured to control the controller 250 by sending instructions to at least one of the communication units 272, 274 using an app running on the mobile phone 310, for example to remotely switch off a certain switching device 1 in a Smart-Home environment.

In the variant with "smart home" integration, all loading processes can be recorded and transferred to a database via the network, e.g. over the Internet to a cloud server. This has several advantages. Because of the collected data of all users, the algorithm is able to learn even faster and to improve the performance significantly by deepening the neural information. Furthermore, the user can be provided with various statistics (e.g. current and temporal course of the quality status of the battery in comparison to battery modulators of other users and/or other manufacturers). For the manufacturers and distributors of accumulators the data can be used to analyse the battery longevity in the field and to optimize the quality.

Due to the learning algorithm, the switch device 200 can recognize previously charged batteries. Over several charging cycles, it is thus possible to draw conclusions about the decreasing quality of the rechargeable batteries that have been repeatedly charged. This is done, for example, by monitoring the battery capacity, which decreases over time. Furthermore, the charging time can be used to draw conclusions about the quality status of the battery. Based on the current consumption, conclusions can be drawn about the increasing internal resistance, which changes over time. By counting all charging cycles, the user can also see how many charge cycles have been carried out. By extrapolating the loss of capacity, forecasts of further capacity loss can be made. In this complex system for the determination of the battery condition, variables such as charging temperature, depth of charge and many more can be included.

The capacity of the battery can be estimated e.g. by integrating over the output current of the switching device during a complete charge cycle. While this integrated output current also includes the power consumption by the charging device, it can still be used to estimate the capacity of the battery. In particular, it can be used to accurately estimate how the capacity of a battery changes over time. For example, if after a number of charging cycles the integrated output current during a charge cycle reduces by 20%, it can be assumed that the capacity of the battery has also been reduced by about 20%.

The switching device 310 may be positioned upstream the charger 300 as an upgrade unit for a plurality of chargers 300, which comprise plugs/sockets matching the sockets/plugs of the output unit 220 of the switching device 200, upgrading the charger 300 with an advanced battery management system. Hence, each battery (not depicted) connected remotely to the switching device 200 according to the second embodiment of the present invention may be charged such that the lifetime of the battery (not depicted) is maximized.

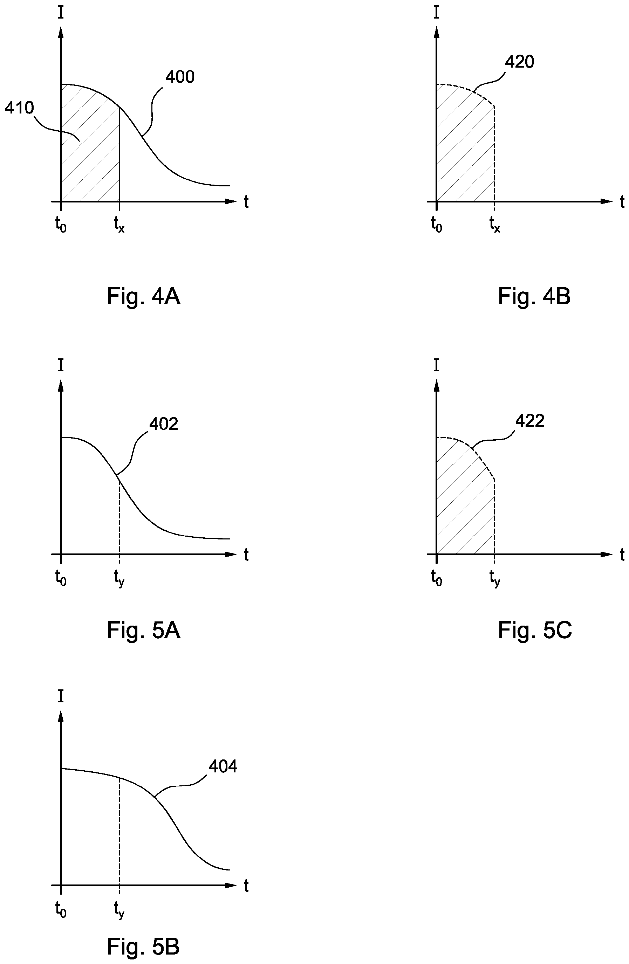

FIG. 4A shows a reference current output curve 400 according to an embodiment of the present invention. The charging curve may refer to a typical progression of an output current I in relation with the time t of charging the battery. The reference output charging curve 400 may cover a full charging cycle of a battery.

The area 410 under the reference output charging curve 400 may correlate to the energy transferred from a power source to the battery from a time tₒ to a time tₓ. Particularly, the area under the reference output charging curve 400 may correlate to the state of charge of the battery. In particular, the state of charge may be estimated as an integral over the reference output charging curve 400, particularly for the case that the start of the charging curve at time tₒ refers to a state of charge of the batter of about 0% and the time-integral starts at 0% of the state of charge of the battery. It is understood that not all output current provided by the output unit of the switching device is provided to the battery. The charger will also have some power consumption and thus some of the output current will be provided for the electronics of the charger and not for the charging of the battery. Nonetheless, experiments have shown that the area under the curve can be used to sufficiently precisely estimate the state of charge.

FIG. 4B shows a curve-shape progression of the measured electric output current 420. Particularly, the scaling of the current I and the time t refer to the current I and time t scaling according to FIG. 4A. In the embodiment of FIGs. 4A and 4B, the electric output current curve 420 the controller may have matched the progression of the reference output current curve 400 with the progression of the curve of the measured electric output current 420. Particularly, the area 410 of the reference output charging curve 400 correlates may be correlated to the state of charge of the battery, particularly may correlate to the area 410 under the reference output charging curve 400. Particularly, the integral over the current I from time tₒ to time tₓ of the reference output current curve 400 may be about the same as of the curve of the measured electric output current 420, which may particularly correspond to the state of charge of the battery.

If from the reference curve it is known that the area under the curve from tₒ to t_{f}, where t_{f} corresponds to the time where charging is finished (100% state of charge) has a value of A_{full}, and an area under the curve for the measured output current has a value of 0,8 A_{full}, then it can be determined that 80% of the required energy for a full charge has been provided to the battery and thus a state of charge of approximately 80% has been reached. In other words, the state of charge is estimated as the area under the curve of the charging curve of an ongoing charging process divided by the area under the curve of the reference curve for a complete charging process.

FIG 5A shows a first reference current output curve 402, which may be a reference current output curve 402 of a first battery/ charger pair, and FIG. 5B shows a second reference current output curve 404, which may be a reference current output curve 404 of a second battery/charger pair. Fig 5C shows a curve-shaped progression of a measured electric output current 422. The battery of FIG. 5C maybe the battery/charger pair of FIG. 4B at a later stage of the battery lifetime, where the charging curve of FIG. 5C may be particularly steeper between time tₒ and time t_{y} due to a loss of battery capacity over time.

By comparing the measured electric output current 422 with the stored reference curves 402, 404, it can be determined that the electric output current 422 (in the interval tₒ to t_{y}) matches the first reference curve 402 in the corresponding interval tₒ to t_{y}. Thus, it can be determined that the measured electric output current 422 corresponds to the first battery/charger pair.

The controller 250 may compare at least the first reference current output curve 402 and the second reference current output curve 404 with the progression of the measured electric output current 422. The controller may calculate a respective deviation of the shapes and, in the case of FIGS 5A and 5B, recognize a higher inclination value between time tₒ and time t_{y} of the reference curve 404 of 5A compared to the inclination of the reference curve 404 of 5B between time tₒ and time t_{y}, regarding the inclination of the progression curve 422 of FIG. 5C. Due to a smaller deviation between the shapes, particularly the inclination value, the controller 250 may match the progression of the measured electric output current 422 to the first reference current output curve 402.

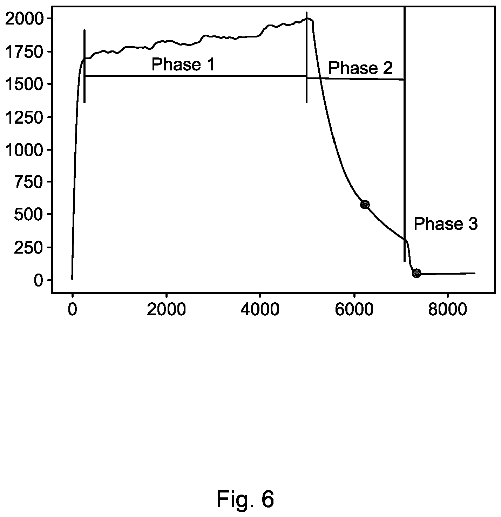

FIG. 6 shows a specific example of a charge curve with several phases: An initial phase, where charging begins and the electric output current, which is provided to the charger, rapidly increases, a first phase where the output current increases linearly over an extended period of time, a second phase, where the output current decreases exponentially, and a third phase, where the charge level of the battery is maintained by providing a low constant output current.

To identify a charge curve (a charge curve is always uniquely identifiable by an end user charger + connected terminal or battery), a machine-learning algorithm can be trained based on recording each charge process, which distinguishes the energy sources and/or chargers from each other. This is achieved by a pattern recognition, which can be supported by a neural network. Once a charge curve has been recorded, each further charge process can be identified and recognized by the machine-learning system and thus, at a desired battery charge state, the charge process can be terminated and/or the power supply can be controlled.

If the first learning of a charge curve was started when the battery was not completely discharged (e.g. at 30% SOC), the already learned charge curve is extended in the following charging process. If, for example, a second charging process is started at 10% SOC, the pattern recognition can assign the second charging process to the first one starting at a SOC of 30% and extends the already learned curve from now on 10% to 100%. However, the lower the start SOC of a known charging curve, the better the exact hit rate for a shutdown at e.g. 75%. As an example: If the user wishes to switch off at 75%, a 10% deviation can occur the first time the device is used, so that the switch-off occurs at 85%. With a further loading process the accuracy is then already at e.g. +/-1% due to the support of the neural network.

A shutdown at a desired SOC is possible even if the charging process is not trained. This is made possible by three additional partial algorithms.
1.) The pre-trained neural network recognizes the charge curve and can assign it to a similar or even identical charge curve shape (access to this can be over the Internet)
2.) If 1.) does not succeed, the integrated algorithm can extract the curve properties (slope, peaks, steps, charge current level, etc.) and determine the most probable SOC based on these parameters using similar parameters either already defined and defined and/or parameters similar to the neural network and control the power supply accordingly.
3.) If 1.) and 2.) do not succeed, an extended threshold shutdown including other characteristic parameters such as slope detection can be used to determine which phase the charging process is in. For example, the charging phases could be divided as follows: phase 1 of the charging process (e.g. <75%), phase 2 (e.g. 75 to 99%) or phase 3 (e.g. 100%). A curve can also be divided into several phases. The phase division allows a switch-off even in case of failure of the neural network and pattern recognition. This multi-part algorithm enables the switch-off of any battery device, but the switch-off accuracy differs depending on the method. By terminating the charging process by means of the machine learning algorithm, which can for example detect a charging capacity of 80%, the lifetime of the rechargeable battery is increased.

## Claims

1. A switching device (100, 200) for a charger (300) for a battery, the switching device (100, 200) comprising:
- an input unit (110, 212, 214) for receiving an electric input current,
- an output unit (120, 222, 224) for providing an electric output current to the charger (300),
- a switch (130, 230, 280) for switching off the electric output current, and
- a controller (150, 250) for controlling the switch (130, 230, 280) based on a state of charge of the battery,
wherein the state of charge is determined by the controller (150, 250) based on the electric output current.

2. The switching device (100, 200) of claim 1, wherein the output unit (120, 222, 224) comprises a standardized power socket and the input unit (110, 212, 214) preferably comprises a matching power plug.

3. The switching device (100, 200) of one of the previous claims, further comprising a current measurement unit (140, 242, 244) for measuring the electric output current at a plurality of times.

4. The switching device (100, 200) of claim 3, wherein the controller (150, 250) comprises a storage unit for storing a reference output current curve (400, 402, 404) indicative of a typical temporal progression of the output current while charging the battery with the charger (300), wherein the controller (150, 250) is configured to determine the state of charge of the battery by comparing the measured electric output current (420, 422) at the plurality of times with the reference output current curve (400, 402, 404), and/or wherein the controller (150, 250) is configured to determine the state of charge of the battery based on the measured current at the plurality of times, particularly based on an area (410) under the reference output current curve (400, 402, 404).

5. The switching device (100, 200) of claim 3 or 4, wherein the controller (150, 250) is configured to determine the reference output current curve (400, 402, 404) based on a reference measurement of the electric output current at a plurality of times during a charging cycle, wherein preferably the charging cycle is a full charging cycle.

6. The switching device (100, 200) of one of the claims 3 to 5, wherein the storage unit of the controller (150, 250) is configured to store a plurality of reference output current curves (400, 402, 404) corresponding to a plurality of charger (300)/battery pairs and wherein the controller (150, 250) is configured to determine a presently connected charger (300)/battery pair by comparing the measured electric output current (420, 422) with the plurality of reference output curves (400, 402, 404).

7. The switching device (100, 200) of one of the previous claims, wherein the controller (150, 250) comprises a neural network.

8. The switching device (100, 200) of one of claims 3 to 7, wherein the switching device (100,200) is configured to switch off at a predetermined threshold value of the output current or time if the controller (150, 250) determines that it cannot determine the presently connected charger (300) and/or the presently connected battery.

9. The switching device of one of the previous claims, wherein the switching device is configured to determine one of several charge phases, based on a slope of the output current over time, wherein preferably the charge phase is defined by a constant slope or an exponential increase or decrease of the output current.

10. The switching device (100, 200) of one of the previous claims, further comprising a zero watt switch (280), wherein the zero watt switch (280) is configured to interrupt the electric input current, such that no power is consumed by the switching device (100, 200), preferably further comprising a reactivation button (282) for reactivating the switching device (100, 200) after it has been switched off using the zero watt switch (280).

11. The switching device (100, 200) of one of the previous claims, wherein the switching device (100, 200) further comprises a communication unit (272, 274) for communicating with an electric device that comprises the battery, wherein the communication unit preferably comprises one of a Bluetooth unit, an NFC unit or a Wi-Fi unit.

12. The switching device (100, 200) of one of the previous claims, wherein the switching device is further configured to measure a charge capacity of the battery and to store the measured charge capacity in a database, such that a progression of the measured charge capacity over successive charge cycles can be determined, wherein preferably the switching device (100, 200) comprises a notification unit to notify the user if the charge capacity of the battery has decreased by more than a predetermined threshold.

13. The switching device (100, 200) of one of the previous claims, the switching device (100, 200) further comprising at least one housing comprising at least two units of the switching device (100, 200), wherein the housing is preferably comprised in one of a flush-mounted socket, a cable, a multiple-socket or a cable drum.

14. A system comprising a switching device (100, 200) according to one of the previous claims, a charger (300) and an electric device (310), connected such that a current to a battery of the electric device (310) via the charger (300) can be switched off by the switching device (100, 200) based on a state of charge of the battery determined by the switching device (100, 200).

15. A method for switching a charger (300) of a battery, the method comprising:
- providing an electric output current to the charger (300),
- measuring, during a first charging of the battery with the charger (300), the electric output current at a first plurality of times;
- based on the measured electric output current at the first plurality of times, determining a reference output charging curve (400, 402, 404) of the charger (300) and/or the battery;
- during a second charging of the battery, determining a state of charge of the battery based on a comparison of the measured electric output current (420, 422) at a second plurality of times and the reference output charging curve (400,402,404); and
- stopping to provide the electric output current to the charger (300) when a predetermined state of charge has been reached.
